# EUROPÄISCHE PATENTSCHRIFT

(11) **EP 1 033 289 B1**
(45) Veröffentlichungstag und Bekanntmachung des Hinweises auf die Patenterteilung: **25.08.2004**
(21) Anmeldenummer: 00104008.8
(22) Anmeldetag: 25.02.2000
(51) Int. Cl.: B60R 16/02

(54) **Aufnahmevorrichtung**
Receiving device
Dispositif de réception

(30) Priorität: 04.03.1999 DE 19909526
(43) Veröffentlichungstag der Anmeldung: 06.09.2000
(73) Patentinhaber: Delphi Technologies, Inc., Troy, MI 48007 (US)
(72) Erfinder: Halbach, Paul Gerhard J., 42369 Wuppertal (DE); Haack, Albrecht, 42369 Wuppertal (DE); Sikora, Andreas, 58099 Hagen (DE)
(74) Vertreter: Manitz, Finsterwald & Partner GbR

(56) Entgegenhaltungen:
- FR-A- 2 750 265
- US-A- 3 321 571
- US-A- 4 372 511
- US-A- 5 473 723

## Beschreibung

Die Erfindung betrifft eine Vorrichtung zur Aufnahme von langgestreckten biegsamen Gegenständen, insbesondere von Lichtleitern, gemäß dem Oberbegriff des Anspruchs 1.

Lichtleiter werden zunehmend auch in Kraftfahrzeugen zum Anschließen und Verbinden von elektrooptischen Bauteilen eingesetzt. Es ist bekannt, die Lichtleiter in röhrenförmigen Umhüllungen zu verlegen, in denen die Lichtleiter vor äußeren Einflüssen geschützt sind. Bei biegsamen Umhüllungen dieser Art besteht die Gefahr, daß der für den jeweiligen Lichtleiter einzuhaltende minimale Krümmungsradius versehentlich unterschritten wird, was zu Beschädigungen des Lichtleiters führt bzw. dessen Funktionsfähigkeit beeinträchtigt. Starre, in einer vorgegebenen Weise gekrümmte Umhüllungen besitzen den Nachteil der begrenzten Verwendungsmöglichkeiten, da mit ihnen jeweils nur ein einziger, durch ihre Form vorgegebener Verlauf für den Lichtleiter möglich ist. Nachteilig bei allen röhrenförmigen Umhüllungen ist, daß mit Anschlüssen versehene Lichtleiter nicht hindurchgeführt werden können, so daß die Lichtleiter erst nach dem Hindurchführen durch die Umhüllungen mit Anschlüssen versehen werden können.

Aus der EP 0 412 233 A2 ist ein Kabelkanal bekannt, der Halterungselemente mit einem Boden und zwei an den Enden des Bodens aufragende Flansche aufweist. Im Boden sind jeweils zwei zueinander rechtwinklige Schlitze ausgebildet, mittels derer die Halterungselemente hintereinander auf einen oder zwei biegsame Federbänder aufgeschoben werden. Wird nur ein Federband verwendet, so kann der Kabelkanal in die Richtung gebogen werden, die das Federband zulässt, wobei die Ausrichtung des Federbandes durch die Lage des verwendeten Schlitzes bestimmt ist. Bei Verwendung von zwei Federbändern entsteht ein verhältnismäßig steifer, gerader Kabelkanal.

Die US 5,473,723 zeigt eine schlauchförmige Schutzumhüllung für optische Fasern, wobei die Wandung der Schutzumhüllung umlaufende Vertiefungen aufweist, so dass eine Biegebegrenzung durch das Aneinanderstoßen der Flächen an jeder Seite der Vertiefung gegeben ist. In einer weiteren Ausführungsform zeigt die D1 eine Schutzumhüllung mit Biegebegrenzung, die aus einer Vielzahl einzelner Schlauchabschnitte gebildet ist.

Es ist das der Erfindung zugrundeliegende Problem (Aufgabe), eine insbesondere zum Verlegen von Lichtleitern geeignete Aufnahmevorrichtung der eingangs genannten Art zu schaffen, in der die aufgenommenen biegsamen Gegenstände möglichst gut vor äußeren Einflüssen ausreichend geschützt sind und die möglichst vielseitig einsetzbar ist.

Die Lösung dieser Aufgabe erfolgt durch die Merkmale des Anspruchs 1.

Durch das Vorsehen eines biegsamen Trägers, an welchem die zusammen den Aufnahmekanal bildenden Kanalglieder angebracht sind, kann dem Aufnahmekanal durch Verbiegen des Trägers prinzipiell jeder beliebige Verlauf gegeben und somit der aufzunehmende biegsame Gegenstand, beispielsweise ein Lichtleiter, entlang jeder beliebigen Raumkurve zwischen zwei gegebenen Punkten verlegt werden. Die erfindungsgemäße Aufnahmevorrichtung ist dadurch besonders variabel und vielseitig verwendbar. Die beabstandete Anordnung der mit dem Träger verbundenen Kanalglieder ermöglicht eine Relativbewegung zwischen jeweils zwei aufeinanderfolgenden Kanalgliedern beim Verbiegen des Trägers. In Abhängigkeit von der Größe des Abstandes und der Ausgestaltung der Kanalglieder ergibt sich ein minimaler Krümmungsradius des Aufnahmekanals, der erreicht ist, wenn beim Verbiegen des Trägers die trägerfernen freien Enden der Kanalglieder zusammenstoßen. Erfindungsgemäß dienen die Kanalglieder somit zur Bildung des Aufnahmekanals und gleichzeitig als Biegebegrenzungsanschläge. Die zumindest einseitig offene Ausbildung des Aufnahmekanals ermöglicht es, einen aufzunehmenden Gegenstand beispielsweise von der Seite her in den Aufnahmekanal einzulegen. Hierbei können die Enden des Gegenstandes bereits mit Bauteilen versehen sein, die größer sind als die freie innere Querschnittsfläche des Aufnahmekanals, da der Gegenstand nicht durch einen geschlossenen Kanal hindurchgefädelt zu werden braucht. Dies ist insbesondere beim Verlegen von Lichtleitern vorteilhaft, da diese mit der erfindungsgemäßen Aufnahmevorrichtung in einem Zustand verlegt werden können, in welchem sie bereits mit Anschlüssen versehen sind.

In einer bevorzugten Variante der Erfindung sind die Kanalglieder identisch ausgeführt und gleichmäßig beabstandet. Hierdurch entsteht eine bezüglich der Längsrichtung regelmäßige Struktur, bei der an jeder Stelle die Einhaltung eines minimalen Krümmungsradius gewährleistet ist.

Zur Realisierung einer insbesondere für Lichtleiter vorteilhaften Biegebegrenzung sind vorzugsweise die Abstände zwischen den Kanalgliedern in Abhängigkeit von einem einzuhaltenden minimalen Krümmungsradius des Aufnahmekanals gewählt, der etwa 20 bis 30mm und bevorzugt etwa 25mm beträgt. Derartige Werte für den Krümmungsradius sind insbesondere für das Verlegen von in Kraftfahrzeugen verwendeten Lichtleitern von Vorteil.

Gemäß einem weiteren bevorzugten Ausführungsbeispiel der Erfindung sind die Kanalglieder jeweils etwa C-förmig ausgebildet und mit ihrem Rücken am Träger angebracht.

Hierbei wird der Aufnahmekanal von den vom Träger abstehenden Armen der C-förmigen Kanalglieder gebildet. Die Länge der Arme, die zum Einstecken oder Einklippsen eines aufzunehmenden Gegenstandes elastisch verformbar sein können, sowie deren beispielsweise bogenförmig gekrümmter oder abgewinkelter Verlauf bestimmen die Größe des von dem Aufnahmekanal bereitgestellten Aufnahmeraumes und die Größe der Zugangsöffnung zum Aufnahmekanal zwischen den gegenüberliegenden freien Enden der Kanalglieder bzw. deren Armen.

Gemäß einer weiteren bevorzugten Ausführungsform der Erfindung sind auf zumindest einer Kanalseite die Kanalglieder abschnittsweise im Bereich ihrer freien Enden durch einen etwa parallel zum Träger verlaufenden Steg miteinander verbunden, wobei zwischen aufeinanderfolgenden Stegabschnitten zumindest bei geradem Träger jeweils ein Zwischenraum vorhanden ist.

Die Stege erhöhen die Stabilität der erfindungsgemäßen Aufnahmevorrichtung und ermöglichen es, die die Zugangsöffnung zum Aufnahmekanal begrenzenden Kanalränder derart auszubilden, daß der jeweils aufzunehmende Gegenstand in den Aufnahmekanal eingeklippst werden kann und somit herausfallsicher im Aufnahmekanal angeordnet ist. Die Zwischenräume zwischen den aufeinanderfolgenden und jeweils zumindest zwei durch einen Steg miteinander verbundene Kanalglieder umfassenden Stegabschnitten gewährleistet die Herstellung des gewünschten gekrümmten Verlaufs des Aufnahmekanals durch Verbiegen des Trägers. Vorzugsweise umfassen die Stegabschnitte jeweils eine geringe Anzahl von aufeinanderfolgenden Kanalgliedern, bevorzugt zwei Kanalglieder. Hierdurch können sowohl die vorteilhaften Möglichkeiten der Stege genutzt als auch gleichzeitig kleine Krümmungsradien erzielt werden.

Gemäß einem weiteren bevorzugten Ausführungsbeispiel der Erfindung sind zumindest einige Stege gegenüber benachbarten Stegen in Richtung der gegenüberliegenden Kanalseite erweitert. Bevorzugt ist dies auf jeder Kanalseite bei jedem zweiten Steg der Fall.

Hierdurch wird eine Zugangsöffnung zum Aufnahmekanal mit in Längsrichtung variierender Breite geschaffen. Wenn gemäß einer weiteren bevorzugten Ausführungsform die erweiterten Stege der beiden Kanalseiten in Längsrichtung gegeneinander versetzt sind, dann weist die Zugangsöffnung zum Aufnahmekanal einen mäanderförmigen Verlauf auf, der um so ausgeprägter ist, je näher die erweiterten Stege der jeweils gegenüberliegenden Kanalseite kommen. Wenn außerdem gemäß einer bevorzugten Variante auf jeder Kanalseite jeder zweite Steg mit einer Erweiterung versehen ist, dann kann hierdurch verhindert werden, daß durch Verwinden der Aufnahmevorrichtung, d.h. durch Verdrehen des Trägers um seine Längsachse, sich die Stege der Kanalseiten derart relativ zueinander ausrichten, daß Abschnitte entstehen, an denen die Zugangsöffnung zum Aufnahmekanal eine konstante Breite aufweist. An solchen Abschnitten bestünde die erfindungsgemäß beseitigte Gefahr, daß ein im Aufnahmekanal befindlicher Gegenstand leichter versehentlich aus dem Aufnahmekanal herausgedrückt oder -gezogen wird als an Abschnitten mit einem erfindungsgemäßen Verlauf der Zugangsöffnung. Der jeweilige Gegenstand ist unter allen beim Umgang mit der erfindungsgemäßen Aufnahmevorrichtung auftretenden Bedingungen sicher im Aufnahmekanal gehalten.

Gemäß einem weiteren bevorzugten Ausführungsbeispiel der Erfindung sind zwei Aufnahmekanäle vorgesehen, deren Kanalglieder mit ihren offenen Seiten in unterschiedliche und vorzugsweise entgegengesetzte Richtungen weisend angeordnet und bevorzugt jeweils auf gleicher Höhe am Träger angebracht sind. Bevorzugt sind die Kanalglieder beider Aufnahmekanäle C-förmig ausgebildet, wobei sie jeweils im Bereich des Trägers derart ineinander übergehen, daß in einer Ebene senkrecht zur Längsrichtung eine etwa X-förmige Struktur vorhanden ist.

Hierdurch wird eine kompakte und stabile wirbelsäulenartige Struktur geschaffen, die einfach und problemlos zu handhaben ist sowie die gleichzeitige Aufnahme von zwei Gegenständen, beispielsweise Lichtleitern, gestattet.

Gemäß einem weiteren bevorzugten Ausführungsbeispiel der Erfindung sind die Stegabschnitte der Aufnahmekanäle derart in Längsrichtung gegeneinander versetzt, daß die Stege und Kanalglieder der nebeneinander liegenden Kanalseiten jeweils eine durchgehende und mäanderförmig in Längsrichtung fortschreitende Rippe bilden.

Hierdurch wird eine besonders stabile und dennoch flexible Struktur geschaffen.

Gemäß einer weiteren bevorzugten Ausführungsform der Erfindung ist der Aufnahmekanal zumindest an einem Ende mit abgerundeten Übergangskanten versehen.

Hierdurch sind die im Aufnahmekanal angeordneten Gegenstände im Bereich des Eintritts in den bzw. des Austritts aus dem Aufnahmekanal vor Beschädigungen durch scharfkantige Übergänge geschützt. Die Abrundungen verhindern in vorteilhafter Weise bei Lichtleitern das Auftreten von Verbiegungen, die als "micro bending" bezeichnet werden.

Weitere bevorzugte Ausführungsformen der Erfindung sind in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1 und 2: verschiedene perspektivische Ansichten einer mit einem Verbinder gekoppelten Aufnahmevorrichtung gemäß einer Ausführungsform der Erfindung,
- Fig. 3: die Aufnahmevorrichtung von Fig. 1 im gekrümmten Zustand, und
- Fig. 4 - 9: die erfindungsgemäße Aufnahmevorrichtung jeweils in einer gegenüber den Fig. 1 bis 3 vergrößerten Teildarstellung.

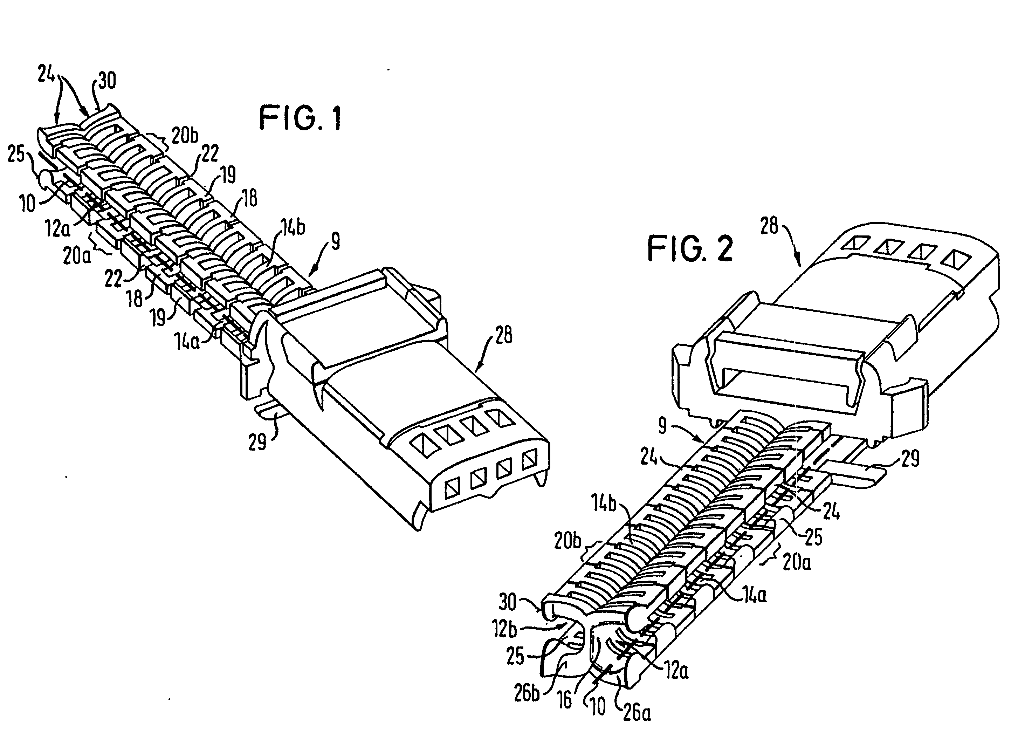

Die Fig. 1 und 2 zeigen eine Aufnahmevorrichtung 9, die mit einem einen Verriegelungsabschnitt 29 aufweisenden Verbinder 28 für jeweils durch eine gestrichelte Linie angedeutete Lichtleiter 10 verbunden ist.

Die Aufnahmevorrichtung 9 weist zwei Aufnahmekanäle 12a, 12b auf, die jeweils durch eine Vielzahl von etwa C-förmigen Kanalgliedern 14a, 14b gebildet werden. Die identisch ausgeführten Kanalglieder 14a, 14b sind jeweils mit ihrem Rücken an einem biegsamen Träger 16 angebracht und in Längsrichtung des Trägers 16 gleichmäßig beabstandet.

Die Aufnahmevorrichtung 9 ist ein einstückig ausgebildetes KunststoffBauteil, wobei die jeweils auf gleicher Höhe in einer senkrecht zum Träger 16 verlaufenden Ebene liegenden Kanalglieder 14a, 14b derart ineinander und in den Träger 16 übergehen, daß jeweils eine X-förmige Struktur entsteht, wie insbesondere in Fig. 2 an einem das vom Verbinder 28 entfernte Ende bildenden Endabschnitt 30 der Aufnahmevorrichtung 9 zu erkennen ist. Die Aufnahmevorrichtung 9 wird somit von einer Vielzahl von hintereinander angeordneten X-förmigen Elementen gebildet, die jeweils zwei Rücken an Rücken angeordnete C-förmige Kanalglieder 14a, 14b umfassen und durch einen stabförmigen Träger 16 miteinander verbunden sind, der auf diese Weise ein flexibles Rückgrat der Aufnahmevorrichtung 9 darstellt.

An jeder Kanalseite 24, 25 der Aufnahmekanäle 12a, 12b bilden jeweils zwei Arme der C-förmigen Kanalglieder 14a, 14b, die durch einen sich parallel zum Träger 16 erstreckenden Steg 18, 19 miteinander verbunden sind, einen Stegabschnitt 20a, 20b der jeweiligen Kanalseite 24, 25. Zwischen zwei aufeinanderfolgenden Stegen 18, 19 ist jeweils ein Zwischenraum 22 vorhanden.

Übergangskanten 26a, 26b des Endabschnitts 30 der Aufnahmevorrichtung 9 sind abgerundet, um in den Aufnahmekanälen 12a, 12b angeordnete Lichtleiter 10 vor Beschädigungen durch scharfkantige Übergänge zu schützen.

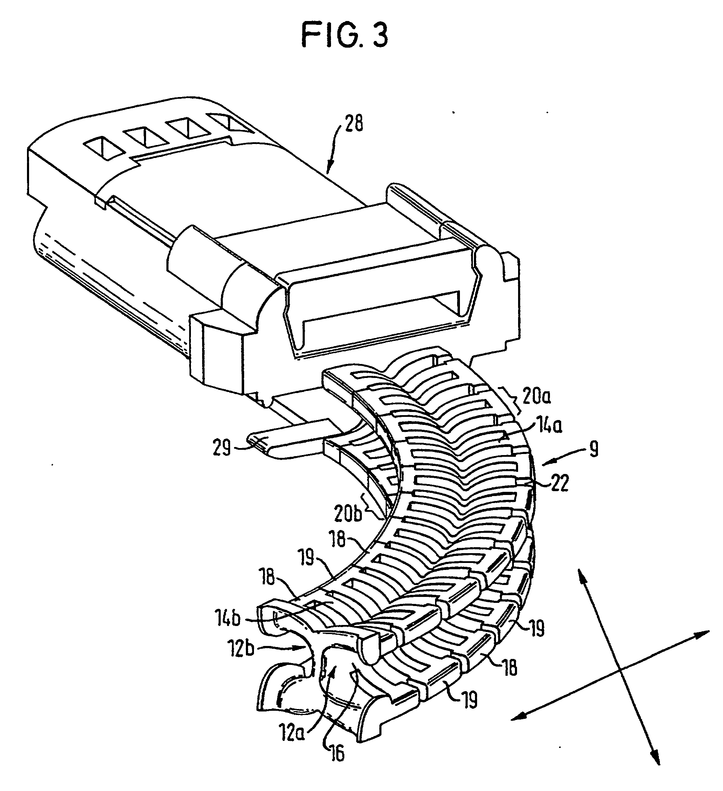

Fig. 3 zeigt die Aufnahmevorrichtung 9 in einem gekrümmten Zustand, in welchem die Aufnahmekanäle 12a, 12b jeweils etwa einen 90°-Bogen beschreiben, so daß nicht dargestellte, in den Aufnahmekanälen 12a, 12b angeordnete Lichtleiter eine entsprechende, durch die beiden Pfeile angedeutete Richtungsänderung erfahren.

Die Zwischenräume 22 zwischen aufeinanderfolgenden Stegabschnitten 20a, 20b ermöglichen die Krümmung der Aufnahmevorrichtung 9 durch Verbiegen des elastisch verformbaren Trägers 16, wobei die Zwischenräume 22 und die C-förmigen Kanalglieder 14a, 14b derart bemessen sind, daß die Einhaltung eines minimalen Krümmungsradius von beispielsweise etwa 25 mm dadurch gewährleistet ist, daß benachbarte Stege 18, 19 auf der Innenseite der gekrümmten Aufnahmevorrichtung 9 aneinanderstoßen.

Die erfindungsgemäße Aufnahmevorrichtung 9 kann auch z.B. in die entgegengesetzte Richtung gekrümmt werden, wobei die in dem Zustand von Fig. 3 auf der Außenseite erweiterten Zwischenräume 22 bei entgegengesetzter Krümmung für die Einhaltung des gleichen minimalen Krümmungsradius sorgen. Grundsätzlich ist eine Krümmung der Aufnahmevorrichtung 9 in einer beliebigen Ebene möglich.

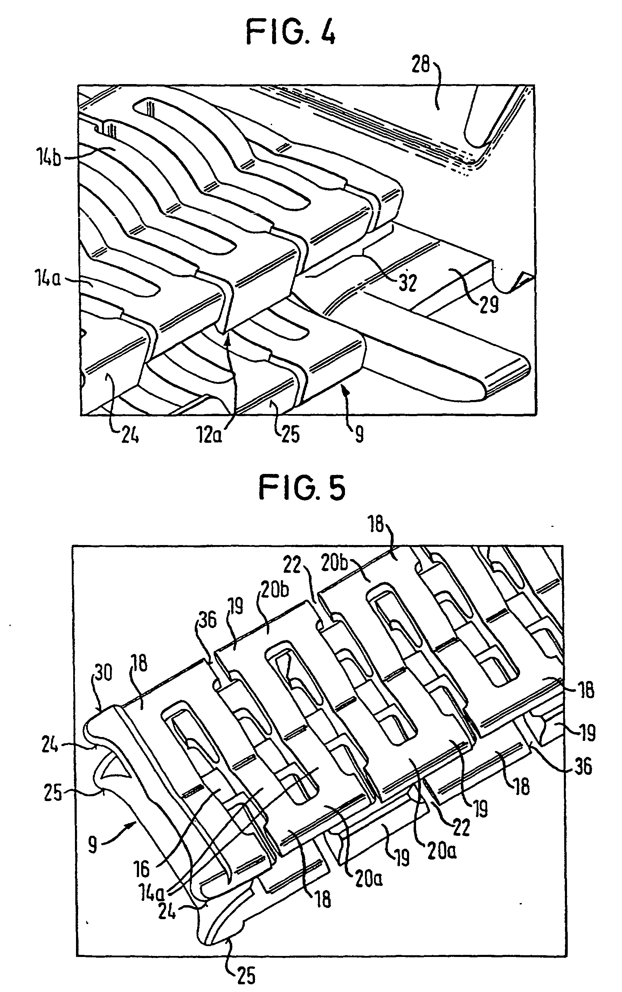

Der Aufbau der erfindungsgemäßen Aufnahmevorrichtung 9 sowie deren Anbindung an den Verbinder 28 wird im folgenden näher anhand der Fig. 4 bis 9 beschrieben, die vergrößerte Teilansichten der in den Fig. 1 bis 3 dargestellten Ausführungsform der Erfindung zeigen.

Fig. 4 zeigt insbesondere die Anbindung der Aufnahmevorrichtung 9 an den Verbinder 28. Die drei letzten Kanalglieder 14a, 14b jedes Aufnahmekanals 12a, 12b bilden zusammen einen Verbindungsabschnitt 32, der auf der einen Kanalseite 25 als Verriegelungsabschnitt 29 des Verbinders 28 ausgebildet ist. Die letzten Kanalglieder 14a, 14b sind somit Bestandteil sowohl der Aufnahmekanäle 12a, 12b bzw. der Aufnahmevorrichtung 9 als auch des Verriegelungsabschnitts 29 bzw. des Verbinders 28. Auf diese Weise ist die einstückig mit dem Verriegelungsabschnitt 29 ausgebildete Aufnahmevorrichtung 9 an den Verbinder 28 angeformt.

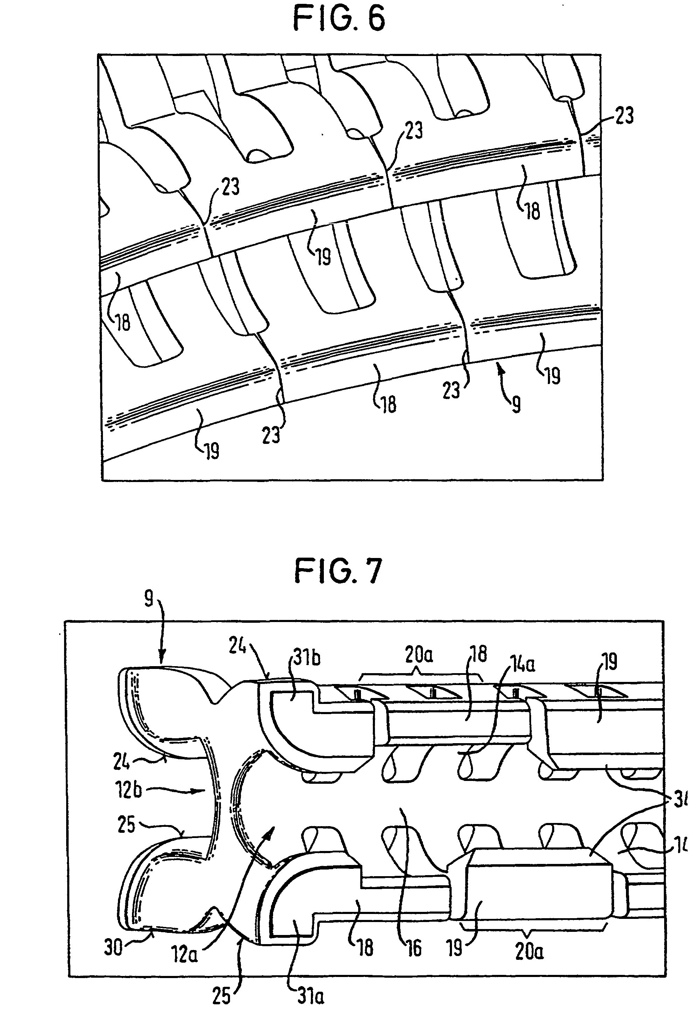

Fig. 5 ist eine Draufsicht auf die mit der Bezugsziffer 24 bezeichneten Kanalseiten der Aufnahmekanäle 12a, 12b. Aus Fig. 5 ist insbesondere zu erkennen, daß die Stege 18, 19 und die jeweils durch die Stege 18, 19 an ihrem freien Ende miteinander verbundenen Kanalglieder 14a, 14b bzw. Arme der Kanalglieder 14a, 14b eine durchgehende und mäanderförmig in Längsrichtung fortschreitende Rippe bilden, welche jeweils die nebeneinander liegenden Kanalseiten 24, 25 der Aufnahmekanäle 12a, 12b bildet. Der mäanderförmige Verlauf der Rippe wird durch die in Längsrichtung um ein Kanalglied 14a, 14b versetzte Anordnung der Stege 18, 19 erreicht. Durch die Anbindung der Arme der Kanalglieder 14a, 14b an den Träger 16 ist die mäanderförmige Rippe zur Mitte hin abgesenkt, wie z.B. auch aus Fig. 4 hervorgeht.

Außerdem zeigt Fig. 5, daß der Zwischenraum 22 zwischen aufeinanderfolgenden Stegen 18, 19 etwa halb so groß ist wie der Abstand zwischen aufeinanderfolgenden Kanalgliedern 14a, 14b. Dies wird dadurch erreicht, daß die Stege 18, 19 nicht bündig mit den Kanalgliedern 14a, 14b abschließen, sondern in Längsrichtung über die Seitenflächen der Kanalglieder 14a, 14b hinaus vorstehen. Die einander zugewandten Stirnseiten der Stege 18, 19 bilden Anschlagflächen 36, die bei Erreichen des minimalen Krümmungsradius der Aufnahmevorrichtung 9 gegeneinander stoßen.

In Fig. 6 ist die erfindungsgemäße Aufnahmevorrichtung 9 in einem Zustand maximaler Krümmung gezeigt, in der die einander zugewandten Stirnseiten der Stege 18, 19 an Anschlagstellen 23 zusammenstoßen, um auf diese Weise die Einhaltung des jeweiligen minimalen Krümmungsradius zu gewährleisten.

In Fig. 7 ist der rechtwinklig gebogene Verlauf von Randabschnitten 31a, 31b des Endabschnitts 30 der Aufnahmevorrichtung 9 zu erkennen. Auf einer Kanalseite 25 geht der Randabschnitt 31a in einen Steg 18 über.

Außerdem geht aus Fig. 7 hervor, daß jeder zweite Steg 19 einer Kanalseite 24, 25 in Richtung der jeweils gegenüberliegenden Kanalseite 24 bzw. 25 erweitert ist. Hierzu ist die der gegenüberliegenden Kanalseite 24, 25 zugewandte Seite der Stege 19 jeweils mit einer zahnartigen, auf der Innenseite den gekrümmten Verlauf der Arme des jeweiligen Kanalgliedes 14a, 14b fortsetzenden Leiste 34 versehen. In Verbindung mit dem abwechselnden Vorsehen von auf diese Weise erweiterten Stegen 19 hat die in Längsrichtung versetzte Anordnung der Stegabschnitte 20a, 20b bzw. der Stege 18, 19 zur Folge, daß jedem somit auf Lücke angeordneten Steg 18, 19 sowohl ein erweiterter Steg 19 als auch ein Steg 18 ohne Erweiterung gegenüberliegt. Auf diese Weise entsteht in Längsrichtung der Aufnahmevorrichtung 9 ein mäanderförmiger Verlauf der Zugangsöffnung in den jeweiligen Aufnahmekanal 12a, 12b.

Der Durchmesser der in die Aufnahmekanäle 12a, 12b aufzunehmenden Lichtleiter ist größer als die Breite der Zugangsöffnung im Bereich von zwei einander gegenüberliegenden Stegen 19, so daß der Lichtleiter in den jeweiligen Aufnahmekanal 12a, 12b verrastend eingesteckt oder eingeklippst werden kann und somit herausfallsicher im Aufnahmekanal 12a, 12b angeordnet ist. Die elastische Verformbarkeit der Arme der Kanalglieder 14a, 14b ermöglicht dieses seitliche Einklippsen der Lichtleiter.

Wenn die einzelnen Kanalglieder 14a, 14b um die durch den Träger 16 verlaufende Mittelachse der Aufnahmevorrichtung 9 gegeneinander verdreht werden, wie es beispielsweise bei der Montage der Aufnahmevorrichtung 9 der Fall sein kann, dann werden jeweils ein Steg 18, 19 auf der einen Kanalseite 24, 25 sowie die beiden diesem Steg 18, 19 gegenüberliegenden Stege 18, 19 der anderen Kanalseite 25, 24 zumindest derart gemeinsam verdreht, daß der geringe Abstand zwischen den gegenüberliegenden erweiterten Stegen 19 bzw. zwischen einem erweiterten Steg 19 und einem gegenüberliegenden Steg 18 ohne Erweiterung zumindest im wesentlichen aufrechterhalten wird. Hierdurch wird verhindert, daß in Längsrichtung der Zugangsöffnung größere Abschnitte mit einer Breite entstehen, die dem großen Abstand zwischen gegenüberliegenden, jeweils keine Erweiterung aufweisenden Stegen 18 entspricht.

Durch die Verbindung zweier aufeinanderfolgender Kanalglieder 14a, 14b durch die Stege 18, 19, die versetzte Anordnung der Stege 18, 19 der beiden Kanalseiten 24, 25 sowie das Vorsehen der zahnartigen Leisten 34 bei jedem zweiten Steg 19 wird folglich sichergestellt, daß in den Aufnahmekanälen 12a, 12b angeordnete Lichtleiter 10 auch bei einem unachtsamen Umgang mit der erfindungsgemäßen Aufnahmevorrichtung 9 nicht versehentlich aus den Aufnahmekanälen 12a, 12b herausspringen.

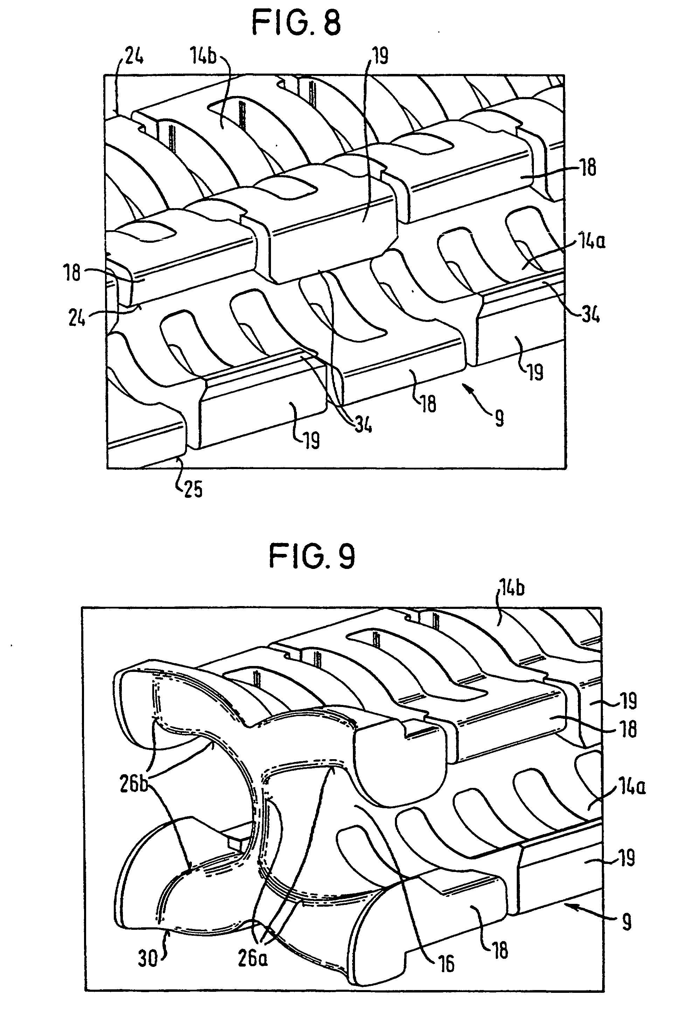

Diese vorteilhafte Ausgestaltung der Kanalseiten 24, 25 geht auch aus Fig. 8 hervor, in der insbesondere die zahnartigen Leisten 34 auf jedem zweiten Steg 19 der Kanalseite 24, 25 zu erkennen sind.

Fig. 9 zeigt insbesondere die abgerundeten Übergangskanten 26a, 26b des Endabschnitts 30.

### Bezugszeichenliste

- 9: Aufnahmevorrichtung
- 10: Lichtleiter
- 12a, 12b: Aufnahmekanal
- 14a, 14b: Kanalglied
- 16: Träger
- 18, 19: Steg
- 20a, 20b: Stegabschnitt
- 22: Zwischenraum
- 23: Anschlagstelle
- 24, 25: Kanalseite
- 26a, 26b: Übergangskante
- 28: Verbinder
- 29: Verriegelungsabschnitt
- 30: Endabschnitt
- 31a, 31b: Randabschnitt
- 32: Verbindungsabschnitt
- 34: Leiste
- 36: Anschlagfläche

## Patentansprüche

1. Vorrichtung zur Aufnahme von langgestreckten biegsamen Gegenständen, insbesondere von Lichtleitern (10), mit wenigstens einem an zumindest einer Längsseite offenen Aufnahmekanal (12a, 12b) aus mehreren voneinander in Längsrichtung beabstandeten Kanalgliedern (14a, 14b), die an einem biegsamen und sich in Längsrichtung erstreckenden Träger (16) angebracht sind,
**dadurch gekennzeichnet,**
**dass** auf zumindest einer Kanalseite (24, 25) die Kanalglieder (14a, 14b) abschnittsweise im Bereich ihrer freien Enden durch einen etwa parallel zum Träger (16) verlaufenden Steg (18, 19) miteinander verbunden sind, wobei zwischen aufeinander folgenden Stegabschnitten (20a, 20b) zumindest bei geradem Träger (16) jeweils ein Zwischenraum (22) vorhanden ist.

2. Aufnahmevorrichtung nach Anspruch 1,
**dadurch gekennzeichnet, daß** der Aufnahmekanal (12a, 12b) derart ausgebildet ist, daß ein aufzunehmender Gegenstand (10) herausfallsicher in den Aufnahmekanal (12a, 12b) einklippsbar ist.

3. Aufnahmevorrichtung nach zumindest einem der vorhergehenden Ansprüche,
**dadurch gekennzeichnet, daß** die Kanalglieder (14a, 14b) einstückig mit dem Träger (16) verbunden sind.

4. Aufnahmevorrichtung nach zumindest einem der vorhergehenden Ansprüche,
**dadurch gekennzeichnet, daß** die Kanalglieder (14a, 14b) jeweils etwa C-förmig ausgebildet und bevorzugt jeweils mit ihrem Rücken am Träger (16) angebracht sind.

5. Aufnahmevorrichtung nach zumindest einem der vorhergehenden Ansprüche,
**dadurch gekennzeichnet, daß** auf beiden Kanalseiten (24, 25) Stegabschnitte (20a, 20b) vorgesehen sind, wobei bevorzugt die Stegabschnitte (20a, 20b) der beiden Kanalseiten (24, 25) in Längsrichtung gegeneinander versetzt sind.

6. Aufnahmevorrichtung nach Anspruch 1 oder 5,
**dadurch gekennzeichnet, daß** die Stegabschnitte (20a, 20b) jeweils eine geringe Anzahl von aufeinanderfolgenden Kanalgliedern (14a, 14b), bevorzugt zwei Kanalglieder (14a, 14b), umfassen.

7. Aufnahmevorrichtung nach zumindest einem der Ansprüche 1, 5 oder 6,
**dadurch gekennzeichnet, daß** zumindest einige Stege (19), bevorzugt jeder zweite Steg (19) einer Kanalseite (24, 25), gegenüber benachbarten Stegen (18) in Richtung der gegenüberliegenden Kanalseite (24, 25) erweitert und insbesondere mit einer in Längsrichtung verlaufenden Leiste (34) versehen sind.

8. Aufnahmevorrichtung nach Ansprurch 7,
**dadurch gekennzeichnet, daß** erweiterte Stege (19) der beiden Kanalseiten (24, 25) in Längsrichtung gegeneinander versetzt sind.

9. Aufnahmevorrichtung nach zumindest einem der vorhergehenden Ansprüche,
**dadurch gekennzeichnet, daß** zwei Aufnahmekanäle (12a, 12b) vorgesehen sind, deren Kanalglieder (14a, 14b) mit ihren offenen Seiten in unterschiedliche und vorzugsweise in entgegengesetzte Richtungen weisend angeordnet und bevorzugt jeweils auf gleicher Höhe am Träger (16) angebracht sind.

10. Aufnahmevorrichtung nach Anspruch 9,
**dadurch gekennzeichnet, daß** C-förmige Kanalglieder (14a, 14b) der Aufnahmekanäle (12a, 12b) jeweils im Bereich des Trägers (16) derart ineinander übergehen, daß in einer Ebene senkrecht zur Längsrichtung eine etwa X-förmige Struktur vorhanden ist.

11. Aufnahmevorrichtung nach Anspruch 9 oder 10,
**dadurch gekennzeichnet, daß** Stegabschnitte der Aufnahmekanäle (12a, 12b) derart in Längsrichtung gegeneinander versetzt sind, daß die Stege (18, 19) und Kanalglieder (14a, 14b) der nebeneinander liegenden Kanalseiten (24, 25) jeweils eine durchgehende und mäanderförmig in Längsrichtung fortschreitende Rippe bilden.

12. Aufnahmevorrichtung nach zumindest einem der vorhergehenden Ansprüche,
**dadurch gekennzeichnet, daß** der Träger (16), die Kanalglieder (14a, 14b) und/oder die Stege (18, 19) jeweils einen Querschnitt von etwa gleicher Größe und/oder Form aufweisen, der bevorzugt zumindest näherungsweise rechteckig ist.

13. Aufnahmevorrichtung nach zumindest einem der vorhergehenden Ansprüche,
**dadurch gekennzeichnet, daß** der Aufnahmekanal (12a, 12b) zumindest an einem Ende mit abgerundeten Austrittskanten (26a, 26b) versehen ist.

14. Aufnahmevorrichtung nach zumindest einem der vorhergehenden Ansprüche,
**dadurch gekennzeichnet, daß** der Aufnahmekanal (12a, 12b) zumindest an einem Ende mit einem Verbinder (28) insbesondere für Lichtleiter (10) verbunden ist, wobei vorzugsweise wenigstens ein Kanalglied (14a, 14b) Bestandteil sowohl des Aufnahmekanals (12a, 12b) als auch des Verbinders (28) ist.

15. Aufnahmevorrichtung nach Anspruch 14,
**dadurch gekennzeichnet, daß** das Kanalglied (14a, 14b) zumindest einen Teil eines Verriegelungsabschnitts (29) des Verbinders (28) bildet.

## Claims

1. Apparatus for the reception of elongate flexible objects, in particular of light conductors (10), comprising at least one reception channel (12a, 12b) which is open at least at one longitudinal side and consists of a plurality of channel members (14a, 14b) which are spaced apart with respect to one another in the longitudinal direction and which are attached to a flexible carrier (16) which extends in the longitudinal direction,
**characterised in that**
the channel members (14a, 14b) are connected to one another section-wise at at least one channel side (24, 25) in the region of their free ends by a web (18, 19) which extends approximately parallel to the carrier (16), with in each case an intermediate space (22) being present between successive web sections (20a, 20b) at least when the carrier (16) is straight

2. Reception apparatus in accordance with claim 1, **characterized in that** the reception channel (12a, 12b) is designed such that an object (10) to be received can be clipped into the reception channel (12a, 12b) in a manner which is safe from falling out.

3. Reception apparatus in accordance with at least one of the preceding claims, **characterized in that** the channel members (14a, 14b) are connected in a single piece to the carrier (16).

4. Reception apparatus in accordance with at least one of the preceding claims, **characterized in that** the channel members (14a, 14b) are in each case designed to be approximately C-shaped and are preferably attached in each case with their back to the carrier (16).

5. Reception apparatus in accordance with at least one of the preceding claims, **characterized in that** web sections (20a, 20b) are provided at both channel sides (24, 25), with the web sections (20a, 20b) of the two channel sides (24, 25) preferably being displaced with respect to one another in the longitudinal direction.

6. Reception apparatus in accordance with claim 1 or claim 5, **characterized in that** the web sections (20a, 20b) in each case comprise a small number of successive channel members (14a, 14b), preferably two channel members (14a, 14b).

7. Reception apparatus in accordance with at least one of the claims 1, 5 or 6, **characterized in that** at least some webs (19), preferably every other web (19) of a channel side (24, 25), are widened with respect to adjacent webs (18) in the direction of the opposite channel side (24, 25) and are in particular provided with a strip (34) which extends in the longitudinal direction.

8. Reception apparatus in accordance with claim 7, **characterized in that** widened webs (19) of the two channel sides (24, 25) are displaced with respect to one another in the longitudinal direction.

9. Reception apparatus in accordance with at least one of the preceding claims, **characterized in that** two reception channels (12a, 12b) are provided, the channel members (14a, 14b) of which are arranged with their open sides pointing in different and preferably in opposite directions and are preferably attached to the carrier (16) in each case at the same level.

10. Reception apparatus in accordance with claim 9, **characterized in that** C-shaped channel members (14a, 14b) of the reception channels (12a, 12b) merge into one another in each case in the region of the carrier (16) such that an approximately X-shaped structure is present in a plane perpendicular to the longitudinal direction.

11. Reception apparatus in accordance with claim 9 or claim 10, **characterized in that** web sections of the reception channels (12a, 12b) are displaced with respect to one another in the longitudinal direction such that the webs (18, 19) and channel members (14a, 14b) of the adjacent channel sides (24, 25) in each case form a continuous rib which progresses in meander shape in the longitudinal direction.

12. Reception apparatus in accordance with at least one of the preceding claims, **characterized in that** the carrier (16), the channel members (14a, 14b) and/or the webs (18, 19) each have a cross-section of approximately the same size and/or shape, which is preferably at least approximately rectangular.

13. Reception apparatus in accordance with at least one of the preceding claims, **characterized in that** the reception channel (12a, 12b) is provided with rounded off emergence edges (26a, 26b) at at least one end.

14. Reception apparatus in accordance with at least one of the preceding claims, **characterized in that** the reception channel (12a, 12b) is connected at at least one end to a connector (28) in particular for light conductors (10), with at least one channel member (14a, 14b) preferably being a constituent both of the reception channel (12a, 12b) and of the connector (28).

15. Reception apparatus in accordance with claim 14, **characterized in that** the channel member (14a, 14b) forms at least a part of a locking section (29) of the connector (28).

## Revendications

1. Dispositif pour recevoir des objets allongés et flexibles, notamment des guides de lumière (10), comportant au moins un canal de réception (12a, 12b) ouvert sur au moins un côté longitudinal et constitué de plusieurs éléments de canal (14a, 14b) distants les uns des autres dans la direction longitudinale et qui sont montés sur un support flexible (16), qui s'étend dans la direction longitudinale, **caractérisé en ce que**
sur au moins un côté (24, 25) du canal, les éléments (14a, 14b) du canal sont reliés entre eux par endroits, dans la zone de leurs extrémités libres, par une barrette (18, 19) qui s'étend approximativement parallèlement au support (16), un espace intercalaire (22) étant respectivement présent entre des éléments de barrette successifs (20a, 20b), au moins dans le cas d'un support rectiligne (16).

2. Dispositif de réception selon la revendication 1, **caractérisé en ce que** le canal de réception (12a, 12b) est agencé de telle sorte qu'un objet (10) devant être reçu peut être encliqueté, d'une manière protégée contre un chute, dans le canal de réception (12a, 12b).

3. Dispositif de réception selon au moins l'une des revendications précédentes, **caractérisé en ce que** les éléments (14a, 14b) du canal sont reliés d'un seul tenant au support (16).

4. Dispositif de réception selon au moins l'une des revendications précédentes, **caractérisé en ce que** les éléments (14a, 14b) du canal sont agencés approximativement en forme de C et sont montés de préférence respectivement avec leur dos sur le support (16).

5. Dispositif de réception selon au moins l'une des revendications précédentes, **caractérisé en ce que** des éléments de barrette (20a, 20b) sont prévus sur les deux côtés (24, 25) du canal, les éléments de barrette (20a, 20b) des deux côtés (24, 25) du canal étant de préférence décalés les uns par rapport aux autres dans la direction longitudinale.

6. Dispositif de réception selon la revendication 1 ou 5, **caractérisé en ce que** les éléments de barrette (20a, 20b) comprennent chacun un nombre réduit d'éléments successifs (14a, 14b) du canal, de préférence deux éléments (14a, 14b) du canal.

7. Dispositif de réception selon au moins l'une des revendications 1, 5 ou 6, **caractérisé en ce qu'**au moins quelques barrettes (19), de préférence chaque seconde barrette (19) d'un côté (24, 25) du canal, sont élargies par rapport à des barrettes voisines (18) dans la direction du côté opposé (24, 25) du canal et sont pourvues notamment d'une réglette (34) qui s'étend dans la direction longitudinale.

8. Dispositif de réception selon la revendication 7, **caractérisé en ce que** des barrettes élargies (19) des deux côtés (24, 25) du canal sont décalées les unes par rapport aux autres dans la direction longitudinale.

9. Dispositif de réception selon au moins l'une des revendications précédentes, **caractérisé en ce qu'**il est prévu deux canaux de réception (12a, 12b), dont les éléments du canal (14a, 14b) sont disposés de telle sorte que leurs côtés opposés sont dirigés dans des directions différentes et de préférence opposées, et sont montés de préférence respectivement à la même hauteur sur le support (16).

10. Dispositif de réception selon la revendication 9, **caractérisé en ce que** des éléments en forme de C (14a, 14b) des canaux de réception (12a, 12b) se prolongent entre eux respectivement dans la zone des supports (16) de telle sorte qu'une structure approximativement en forme de X est présente dans un plan perpendiculaire à la direction longitudinale.

11. Dispositif de réception selon la revendication 9 ou 10, **caractérisé en ce que** les éléments de barrette des canaux de réception (12a, 12b) sont décalés réciproquement dans la direction longitudinale de telle sorte que les barrettes (18, 19) et les éléments (14a, 14b) des côtés (24, 25), qui sont situés côte-à-côte, des canaux forment respectivement une nervure continue et qui se poursuit avec une forme sinueuse dans la direction longitudinale.

12. Dispositif de réception selon au moins l'une des revendications précédentes, **caractérisé en ce que** le support (16), les éléments (14a, 14b) des canaux et/ou les barrettes (18, 19) possèdent respectivement une section transversale ayant approximativement la même taille et/ou la même forme et qui est de préférence au moins approximativement rectangulaire.

13. Dispositif de réception selon au moins l'une des revendications précédentes, **caractérisé en ce que** le canal de réception (12a, 12b) comporte au moins sur une extrémité des bords de sortie arrondis (26a, 26b).

14. Dispositif de réception selon au moins l'une des revendications précédentes, **caractérisé en ce que** le canal de réception (12a, 12b) est relié, au moins au niveau d'une extrémité, à un connecteur (28) notamment pour des guides de lumière (10), de préférence au moins un élément (14a, 14b) du canal faisant partie aussi bien du canal de réception (12a, 12b) que du connecteur (28).

15. Dispositif de réception selon la revendication 14, **caractérisé en ce que** l'élément (14a, 14b) du canal forme au moins une partie d'une section de verrouillage (29) du connecteur (28).
